Europäisches Patentamt

European Patent Office

Office européen des brevets

(11) Veröffentlichungsnummer: **0 191 272**
A1

(12) # EUROPÄISCHE PATENTANMELDUNG

(21) Anmeldenummer: **85830028.8**

(22) Anmeldetag: **12.02.85**

(51) Int. Cl.⁴: **B 60 N 1/02**

(43) Veröffentlichungstag der Anmeldung: **20.08.86**
Patentblatt 86/34

(84) Benannte Vertragsstaaten: **AT BE CH DE FR GB IT LI LU NL SE**

(71) Anmelder: **KEIPER RECARO S.p.A., I-20069 Pozzo d'Adda (IT)**

(72) Erfinder: **Kramer, Horst, Turmstrasse 10, D-7312 Kirchheim/Teck (DE)**
Erfinder: **Peetz, Walter, Via Locatelli 14, I-24100 Bergamo (IT)**

(74) Vertreter: **Patentanwälte Phys. Bartels Dipl.-Ing. Fink Dr.-Ing. Held, Lange Strasse 51, D-7000 Stuttgart 1 (DE)**

(54) **Einrichtung zur Begrenzung des Bewegungsbereiches eines mittels einer motorischen Antriebseinrichtung bewegbaren Gegenstandes.**

(57) Insbesondere hat die Erfindung den Zweck die Versetzung eines Fahrzeugsitzes zum Schutz des Gegenstandes vor einer Kollision mit einem feststehenden Körper zu begrenzen.

Die Einrichtung ist der Art, die einen Näherungsschalter aufweist, welcher ein Abschalten oder eine Bewegungsverrichtungsumkehr des Fahrzeugsitzes, bzw. eines seiner Teile bewirkt.

Die Einrichtung ist dadurch gekennzeichnet, dass dem als Näherungsschalter (10) mit einem Schwingkreis ausgebildeten Schalter eine Metallfolie als Bedämpfungskörper (11) zugeordnet ist.

# Patentanwälte
European Patent Attorneys

**Phys. H. Bartels**
**Dipl.-Ing. H. Fink** 72
**Dr.-Ing. M. Held**

Patentanwälte · Lange Straße 51 · D-7000 Stuttgart 1

Zugelassene Vertreter
beim Europäischen Patentamt

15. November 1984
Reg.-Nr. 126 822
Unsere Ref.: 3336


KEIPER RECARO S.p.A., 2069 POZZO D'ADDA (Italien)

---

Einrichtung zur Begrenzng des Bewegungsbereiches eines mittels
einer motorischen Antriebseinrichtung bewegbaren Gegenstandes

---

Die Erfindung betrifft eine Einrichtung zur Begrenzung des Bewegungsbereiches eines mittels einer motorischen Antriebseinrichtung bewegbaren Gegenstandes, beispielsweise eines verstellbaren Fahrzeugsitzes, insbesondere zum Schutze des Gegenstandes vor einer Kollision mit einem in die Bewegungsbahn des Gegenstandes ragenden Körper oder Teil eines Körpers, mit wenigstens einem Schalter, der ein Signal erzeugt, aufgrund dessen eine Steuereinrichtung ein Abschalten oder eine Bewegungsverrichtungsumkehr der Antriebseinrichtung bewirkt, wenn der Gegenstand bei einer Bewegung eine vorbestimmte Position erreicht hat.

Telefon (07 11) 29 63 10 u. 29 72 95          Postscheck Stuttgart (BLZ 600 100 70) 72 11-700          Telefonische Auskünfte und Aufträge sind
nur nach schriftlicher Bestätigung verbindlich

Es sind Näherungsschalter bekannt, die einen Schwingkreis aufweisen, welcher bedämpft wird, wenn der Abstand zu einem aus Stahl oder Eisen bestehenden Bedämpfungskörper einen Mindestwert erreicht hat. Als Bedämpfungskörper kommt auch ein aus Stahl oder Eisen bestehendes Bauteil in Frage. Es muß jedoch stets gewährleistet sein, daß nur der Bedämpfungskörper dem Näherungsschalter so nahe kommt, daß das für die Auslösung eines Signals erforderlich Ausmaß der Dämpfung erreicht wird.

Diese Voraussetzung läßt sich in vielen Fällen bei der Begrenzung des Bewegungsbereiches eines Fahrzeugsitzes nicht erfüllen, was vor allem dann gilt, wenn der Bedämpfungskörper von einem Polster bedeckt sein muß und deshalb der minimale Abstand zwischen Bedämpfungskörper und Näherungsschalter gleich der Polsterdicke ist. Man hat deshalb bisher für die Begrenzung des Bewegungsbereiches von Fahrzeugsitzen mechanisch zu betätigende Endschalter verwendet, welche die Bewegung beenden, eventuell außerdem eine Umsteuerung der Bewegungsrichtung bewirken. Derartige Endschalter lassen sich aber nur dann problemlos einsetzen, wenn die Betätigung durch ein ungepolstertes Teil des Fahrzeugsitzes erfolgen kann. Für die Begrenzung des Bewegungsbereiches gepolsterter Teile ist deshalb schon der Einsatz von Lichtschranken vorgeschlagen worden. Lichtschranken sind jedoch allein schon wegen der Verschmutzungsgefahr störanfällig und außerdem aufwendig.

Der Erfindung liegt daher die Aufgabe zugrunde, eine Einrichtung zur Begrenzung des Bewegungsbereiches eines Gegenstandes, insbesondere eines Fahrzeugsitzes, zu schaffen, die unabhängig von der Ausbildung des Gegenstandes problemlos verwendet werden kann und dennoch störunanfällig ist. Diese Aufgabe löst einen Einrichtung mit den Merkmalen des Anspruches 1.

Eine metallische Folie als Bedämpfungskörper läßt sich ohne Schwierigkeiten überall dort anbringen, wo dies erwünscht ist, da sie sich an die Form, die der Gegenstand an der betreffenden Stelle hat, ohne weiteres anpassen läßt und auch die Befestigung am Gegenstand keine Schwierigkeiten bereitet, weil die Metallfolie beispielsweise mit dem Gegenstand verklebt werden kann. Auch wenn der Gegenstand ein Polster ist oder mittels eines Polsters abgedeckt ist, wie dies beispielsweise bei vielen Teilen eines Fahrzeugsitzes der Fall ist, schafft das Anbringen der Metallfolie in einer optimalen Position keine Probleme, weil die Folie beispielsweise unmittelbar unter dem Bezugsmaterial oder der die Polsteroberfläche bildende Schicht angeordnet werden kann. Hierdurch kann der minimale Abstand zwischen dem Näherungsschalter und dem ihm zugeordneten Bedämpfungskörper gering gehalten werden, ohne daß beispielsweise die Sicherheitsfunktion des Polster beeinträchtigt wird. Der geringe minimale Abstand, der zwischen Näherungsschalter und Metallfolie erreichbar ist, stellt sicher, daß eine für ein störungsfreies Arbeiten des Näherungsschalter ausreichende Bedämpfung erreicht wird. Andererseits wird hierdurch ausgeschlossen, daß der Näherungsschalter auch auf andere metallische Bauteile anspricht und damit Fehlersignale erzeugt.

Grundsätzlich ist es ohne Bedeutung, an welchem der beiden relativ zueinander bewegbaren Teile der Näherungsschalter und die metallische Folie angeordnet wird. Bei einem verstellbaren Fahrzeugsitz wird es jedoch vielfach vorteilhafter sein, den Näherungsschalter an einem relativ zur Fahrzeugkarosserie unbeweglich angeordneten Bauteil und die metallische Folie am Fahrzeugsitz festzulegen. Eine solche Zuordnung vereinfacht die Anordnung der erforderlichen Kabel, und außerdem ist es in der Regel wesentlich einfacher, in das Polster eine dünne metallische Folie einzulegen als einen Näherungsschalter einzubauen.

Da die metallische Folie sehr dünn sein kann, ist es vorteilhaft, sie auf einer Trägerschicht vorzusehen. In diesem Falle kann die metallische Folie beispielsweise auch auf die Trägerschicht aufgedampft sein. Die Rückseite der Trägerschicht oder, wenn eine Trägerschicht nicht vorhanden ist, die eine Seite der Folie kann mit einem Klebstoff beschichtet sein, der vorzugsweise selbsthaftend ist. Die Folie braucht dann nur an diejenige Fläche angelegt zu werden, die als Trägerfläche vorgesehen ist. Hierbei kann es sich auch um die Unterseite eines Bezugsstoffes für ein Polster oder um eine Fläche eines Polstermaterials handeln.

Besonders günstig ist eine Metallfolie aus Aluminium.

Bei einer bevorzugten Ausführungsform ist der Näherungsschalter so ausgebildet, daß der Bedämpfungskörper nur eine Verringerung der Amplitude der Schwingungen bewirkt, ein Abreißen der Schwingungen aber verhindert wird, damit sichergestellt ist, daß der Näherungsschalter noch voll funktionsfähig ist, sobald der Abstand zwischen ihm und der Metallfolie wieder einen Wert erreicht hat, der größer ist als der zur Auslösung eines Signals erforderliche Minimalwert. Dem Näherungsschalter ist dann vorzugsweise ein Gleichrichter und diesem ein Schwellwertschalter nachgeschaltet. Da der Schwellwertschalter nur dann in seinen anderen Schaltzustand übergeht, wenn die Amplitude der Schwingungen des Schwingkreises, welcher im Näherungsschalter enthalten ist, einen Grenzwert unterschreitet, können zuverlässig und störungsfrei die Signale erzeugt werden, die notwendig sind, um die Bewegung des zu überwachenden Gegenstandes zu beenden oder deren Richtung umzukehren.

Bei einer bevorzugten Ausführungsform ist dem Schwellwertschalter eine Hysterese-Optimierungsschaltung nachgeschaltet. Mit dieser Optimierungsschaltung lassen sich unterschiedliche Positionen der Metallfolie relativ zum Näherungsschalter für die Auslösung eine die Annäherung kennzeichnenden Signales und die Auslösung eines dasEntfernen kennzeichnenden Signales einstellen und an die Erfordernisse anpassen. Dies ist vor allem dann vorteilhaft, wenn die Position des Gegenstandes mittels zweier Antriebeseinrichtungen veränderbar und eine Aktivierung dieser beiden Antriebseinrichtungen im Wechsel erforderlich ist, um den Gegenstand in eine bestimmte Position zu bringen.

Im folgenden ist die Erfindung anhand eines in der Zeichnung dargestellten Ausführungsbeispiels im einzelnen erläutert. Es zeigen

Fig. 1    eine schematisch dargestellte Seitenansicht eines sich  im Inneren der Karosserie des Fahrzeuges befindenden Fahrzeugsitzes

Fig. 2    einen unvollständig dargestellten Schnitt längs der Linie II-II der Figur 1,

Fig. 3    einen unvollständig und vergrößert dargestellten Schnitt in einer Horizontalebene in Höhe der Linie III-III der Figur 2,

Fig. 4    ein Blockschaltbild des Ausführungsbeispiels.

Ein Kraftfahrzeug, dessen Karosserie mit 1 bezeichnet ist, weist einen Sitz 2 auf, der in Fahrzeuglängsrichtung in den Schienen 3 verschiebbar geführt ist, die am Boden der Karosserie 1 befestigt sind. Die Längsverstellung erfolgt mittels eines Elektromotors 4, der mit wählbarer Drehrichtung eine Verbindungswelle 5 antreibt, die ihrerseits je ein mit den beiden Schienen 3 zusammenwirkendes Verstellgetriebe antreibt.

Der Sitz 2 hat eine in ihrer Neigungslage veränderbare Rückenlehne 2', und die Neigungsverstellung der Rückenlehne 2' erfolgt mittels eines Elektromotors 6.

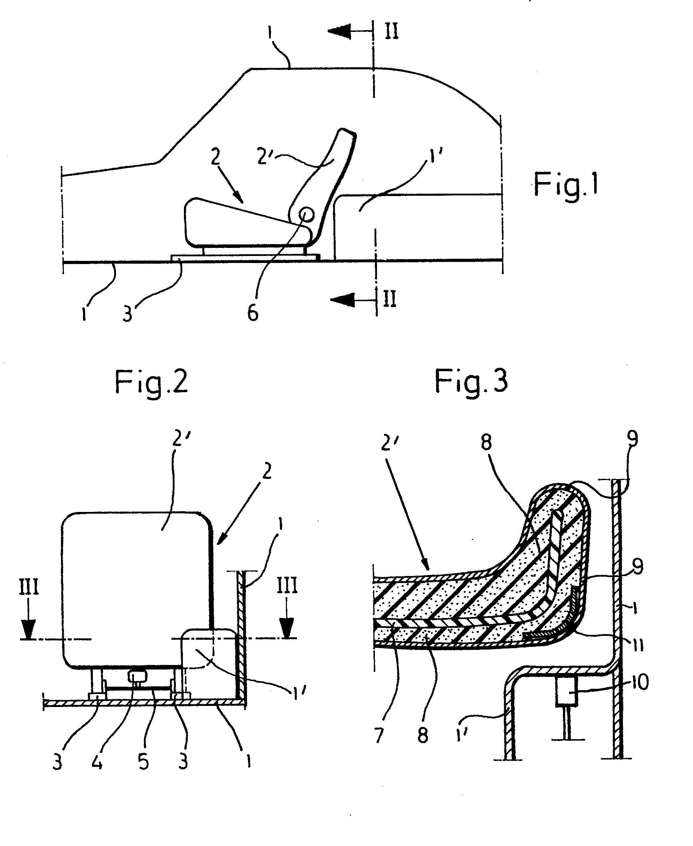

Wie die Figuren 1 bis 3 zeigen, ragt in den Schwenkbereich der Rückenlehne 2' ein nach innen vorspringender Teil 1' der Karosserie 1. Wie insbesondere Figur 1 erkennen läßt, hängt die Neigungslage der Rückenlehne 2', in der sie in Anlage an den vorspringenden Teil 1' kommt, auch von der Längsposition des Sitzes ab. Daher muß die Rückenlehne 2' um so steiler stehen, je weiter der Sitz 2 nach hinten verstellt werden soll.

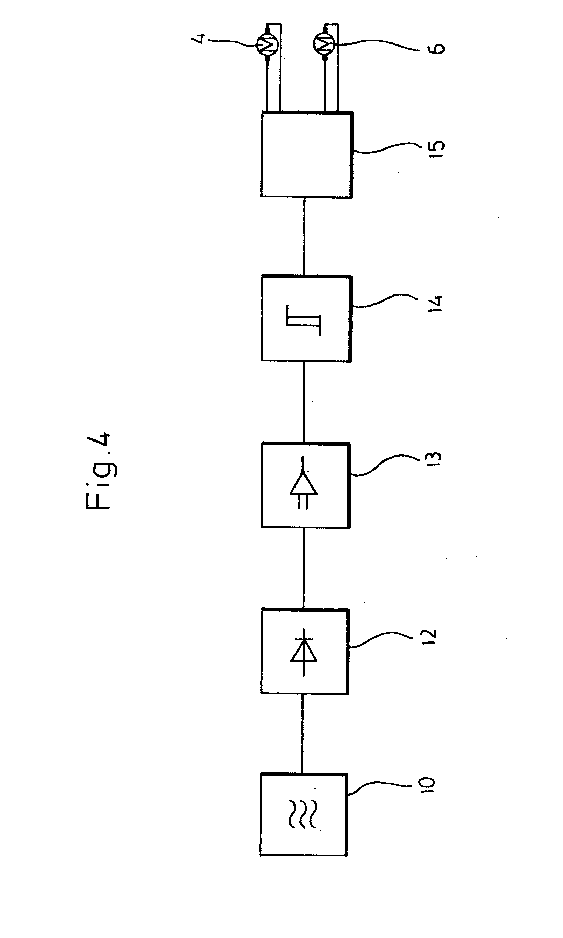

Um zu verhindern, daß die Rückenlehne 2', deren Polsterträger 7 nicht nur auf seiner Vorderseite, sondern auch auf seiner Rückseite eine Polsterauflage 8 trägt, die mit einer relativ dünnen Schicht 9 eines Bezugsmaterials, beispielsweise Leder, abgedeckt ist, gegen den vorspringenden Teil 1' gedrückt wird und an diesem eventuell scheuert, was zu einer Beschädigung der Schicht 9 führen könnte, ist eine Einrichtung zur Begrenzung der Längsverschiebung des Sitzes 2 nach hinten und der Schwenkbewegung der Rückenlehne 2' vorgesehen. Diese Einrichtung weist in der oberen, gegen die Rückenlehne 2' weisenden Ecke des vorspringenden Teils 1' einen Näherungsschalter 10 auf, der einen Schwingkreis enthält, dessen elektromagnetisches Feld gegen die ihm zugekehrte, abgerundete Seitenkante der Rückenlehne 2' gerichtet ist. Der Schwingkreis des Näherungsschalters 10 wird durch einen Bedämpfungskörper 11 in der Weise gedämpft, daß die Amplitude der Schwingungen vermindert wird. Ein Abreißen der Schwingungen kann der Bedämpfungskörper 11 jedoch nicht bewirken. Wie Figur 4 zeigt, wird die Schwingkreisspannung einem Gleichrichter 12 zugeführt, der ein der Amplitude der Schwingung proportionales Signal erzeugt, welches ebenso wie eine Refernzspannung am Eingang eines Schwellwertschalters 13 anliegt. Wenn das Ausgangssignal des Gleichrichters 12 auf den Wert der Referenzspannung oder unter diesen abgesunken ist, tritt am Ausgang des Schwellwertschalters 13 ein Signal auf, das unter Zwischenschaltung einer Hysterese-Optimierungschaltung 14 einer Motorsteuerung 15 für die beiden Elektromotoren 4 und 6 zugeführt wird. Mittels der Hystere-Optimierungsschaltung 14 können unterschiedliche Schaltpunkte für die Einschaltung und die Abschaltung der an die Motorsteuerung 15 angeschlossenen Motoren eingestellt werden .

Der Bedämpfungskörper 11 wird durch eine dünne Aluminiumfolie gebildet, die sich auf einem ebenfalls sehr dünnen und flexiblen Träger befindet, dessen der Aluminiumfolie abgekehrte Rückseite mit einem selbsthaftenden Kleber beschichtet ist. Wie Figur 3 zeigt, liegt dieser folienförmige Bedämpfungskörper 11 direkt unter der Schicht 9 auf der dieser zugekehrten Oberfläche der Polsterauflage 8 auf und ist mit dieser Oberfläche verklebt. Weder die Form noch die Eigenschaften der rückseitigen und seitlichen Polsterung der Rückenlehne 2' wird durch diesen Dämpfungskörper 11 in irgendeiner Weise beeinträchtigt, der außerdem wegen der geringen Dicke der Aluminiumfolie den Schwingkreis des Näherungsschalters 10 stark bedämpft, sobald er einen bestimmten Mindestabstand vom Näherungsschalter 10 erreicht hat. Dieser Abstand kann sehr gering sein, da auch die Dicke der Schicht 9 und einer gegebenenfalls vorhandenen Bespannung oder sonstigen Beschichtungen des Teiles 1' relativ gering ist.

Wenn beispielsweise der Sitz aus der in Figur 1 dargestellten Position nach hinten verstellt werden soll, wird der Schwingkreis des Näherungsschalters 10 in einem für die Auslösung eines Schaltvorgangs des Schwellwertschalters 13 ausreichenden Maße bedämpft, sobald der den Bedämpfungskörper 11 tragende Bereich der Rückenlehne 2' einen Mindestabstand von dem vorspringenden Teil 1' erreicht hat. Die Motorsteuerung 15 schaltet daraufhin den Elektromotor 4 ab, um eine Kollision der Rückenlehne 2' mit dem vorspringenden Teil 1' zu vermeiden. Wird der Befehl für eine Verstellung des Sitzes 2 nach hinten weiterhin aufrechterhalten, dann schaltet im Ausführungsbeispiel die Motorsteuerung 15 den Elektromotor 6 im Sinne einer Schwenkung der Rückenlehne 2' nach vorne so lange ein, bis der nun größer werdende Abstand zwischen dem Bedämpfungkörper 11 und dem Näherungsschalter 10 einen Wert erreicht hat, der mittels der Optimierungsschaltung 14 vorgegeben ist und dazu führt, daß der Schellwertschalter 13 wieder in seine Ausgangsstellung zurückgeht. Anschließend schaltet die Motorsteuerung 15 den Elektromotor 4 wieder ein, bis erneut eine Abschaltung aufgrund eines vom Näherungsschalter 10 ausgelösten Abschaltsignals erfolgt. Dieser Vorgang, bei dem im Wechsel der Sitz 2 und die Rückenlehne 2' verstellt werden, wird automatisch so lange fortgesetzt, bis kein Verstellbefehl mehr wirksam oder die steilste Stellung der Rückenlehne 2' erreicht ist. Entsprechend wird mittels der Motorsteuerung 15 eine Längsverstellung des Sitzes 2 nach vorne bewirkt, wenn dies die gewünschte Neigungsverstellung der Rückenlehne 2' nach hinten erforderlich macht, um eine Kollision mit dem vorspringenden Teil 1' zu vermeiden.

0191272

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Patentansprüche

1. Einrichtung zur Begrenzung des Bewegungsbereiches eines mittels eine motorischen Antriebs bewegbaren Gegenstandes, vorzugsweise eines verstellbaren Fahrzeugsitzes, insbesondere zum Schutze des Gegenstandes vor einer Kollision mit einem in die Bewegungsbahn des Gegenstandes ragenden Körper oder Teil eines Körpers, mit wenigstens einem Schalter, der ein Signal erzeugt, aufgrund dessen eine Steuereinrichtung ein Abschalten und/oder eine Umsteuerung der Bewegungsrichtungs der Antriebseinrichtung bewirkt, wenn der Gegenstand bei einer Bewegung eine vorbestimmte Position erreicht hat, dadurch gekennzeichnet, daß dem als Näherungsschalter (10) mit einem Schwingkreis ausgebildetem Schalter eine Metallfolie als Bedämpfungskörper (11) zugeordnet ist.

2. Einrichtung nach Anspruch 1, dadurch gekennzeichnet, daß bei einem Bauteil in Form eines Fahrzeugsitzes (2) der Näherungsschalter (10) relativ zur Fahrzeugkarosserie (1) unbeweglich angeordnet und der Bedämpfungskörper (11) am Fahrzeugsitz (2) festgelegt ist.

3. Einrichtung nach Anspruch 2, dadurch gekennzeichnet, daß die den Bedämpfungskörper (11) bildende metallische Folie unmittelbar unter dem Bezugsmaterial (11) des Fahrzeugsitzes (2) liegt.

4. Einrichtung nach einem der Ansprüche 1 bis 3, dadurch gekennzeichnet, daß die metallische Folie auf ihrer einen Seite mit einem vorzugsweise selbsthaftendem Klebstoff beschichtet ist.

0191272

5. Einrichtung nach einem der Ansprüche 1 bis 4, dadurch gekennzeichnet, daß die metallische Folie eine Trägerschicht aufweist, auf deren eine Seite die Metallschicht aufgebracht ist.

6. Einrichtung nach einem der Ansprüche 1 bis 5, dadurch gekennzeichnet, daß die den Bedämpfungskörper (11) bildende Metallfolie aus Aluminium besteht.

7. Einrichtung nach einem der Ansprüche 1 bis 6, dadurch gekennzeichnet, daß dem Näherungsschalter (10), dessen Schwingungsamplitude eine mit zunehmender Bedämpfung abnehmende Größe hat, ein Gleichrichter (12) und diesem ein Schwellwertschalter (13) nachgeschaltet ist.

8. Einrichtung nach Anspruch 7, dadurch gekennzeichnet, daß dem Schwellwertschalter (13) eine Hysterese-Optimierungsschaltung (14) nachgeschaltet ist.

- . -

Fig.1

Fig.2

Fig.3

# Fig.4

0191272

0191272
Nummer der Anmeldung

Europäisches
Patentamt

EP 85 83 0028

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 512 405 (BOSCH) <br> * Seite 2, Zeile 16 - Seite 3, Zeile 24; Figuren * | 1 | B 60 N 1/02 |
| | --- | | |
| Y | DE-A-2 165 131 (MÜLLER) <br> * Seite 4, Zeile 16 - Seite 5, Zeile 17; Figuren * | 1 | |
| | --- | | |
| A | DE-A-2 107 145 (STANDARD) | | |
| | --- | | |
| A | DE-A-2 839 367 (KOSTAL) | | |
| | --- | | |
| A | DE-A-3 003 423 (CREMER) | | |
| | ----- | | |

RECHERCHIERTE
SACHGEBIETE (Int. Cl.4)

B 60 N 1/00
H 03 K 17/00

Der vorliegende Recherchenbericht wurde für alle Patentansprüche erstellt.

| Recherchenort <br> DEN HAAG | Abschlußdatum der Recherche <br> 10-10-1985 | Prüfer <br> HORVATH R.C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82